# EUROPEAN PATENT SPECIFICATION

(11) **EP 2 461 183 B1**
(45) Date of publication and mention of the grant of the patent: **03.10.2018**
(21) Application number: 11184684.6
(22) Date of filing: 11.10.2011
(51) Int. Cl.: G01T 1/164, G01T 1/202, G01T 1/29

(54) **Positron emission tomography detector module, radiation detector, positron emission tomography scanner system, method of processing signals, and method of manufacturing radiation detector module**
Positronenemissionstomographiedetektormodul, Strahlungsdetektor, Positronenemissionstomographieabtastsystem, Verfahren zur Verarbeitung von Signalen und Verfahren zur Herstellung eines Strahlungsdetektormoduls
Module détecteur de tomographie à émission de positrons, détecteur de radiations, système de balayage de tomographie à émission de positrons, procédé de traitement de signaux et procédé pour la fabrication du module détecteur de radiations

(30) Priority: 19.10.2010 US 907092; 27.09.2011 JP 2011210687
(43) Date of publication of application: 06.06.2012
(60) Divisional application: 18178594.0
(73) Proprietor: Toshiba Medical Systems Corporation, Otawara-Shi, Tochigi-Ken 324-8550 (JP)
(72) Inventor: Wang, Zhengyan, Otawara-Shi, Tochigi 324-8550 (JP); Burr, Kent, Otawara-Shi, Tochigi 324-8550 (JP)
(74) Representative: Kramer Barske Schmidtchen Patentanwälte PartG mbB

(56) References cited:
- WO-A1-93/23769
- WO-A1-03/065074
- WO-A2-03/040757
- GB-A- 2 175 780
- JP-A- H05 126 957
- US-A- 5 032 728
- US-A1- 2007 221 856
- US-B1- 7 180 074

## Description

### FIELD

Embodiments described herein relate generally to the design of radiation detectors, such as for gamma ray detection and positron emission tomography.

### BACKGROUND

The use of gamma ray detectors in general, and positron emission tomography (PET) in particular, is growing in the field of medical imaging. In PET imaging, a radiopharmaceutical agent is introduced into an object to be imaged via injection, inhalation, or ingestion. After administration of the radiopharmaceutical, the physical and bio-molecular properties of the agent will cause it to concentrate at specific locations in the human body. The actual spatial distribution of the agent, the intensity of the region of accumulation of the agent, and the kinetics of the process from administration to eventually elimination are all factors that may have clinical significance. During this process, a positron emitter attached to the radiopharmaceutical agent will emit positrons according to the physical properties of the isotope, such as half-life, branching ratio, etc. The radionuclide emits positrons, and when an emitted positron collides with an electron, an annihilation event occurs, wherein the positron and electron are destroyed. Most of the time, an annihilation event produces two gamma rays (at 511 keV) traveling at substantially 180 degrees apart.

By detecting the two gamma rays, and drawing a line between their locations, i.e., the line-of-response (LOR), one can retrieve the likely location of the original disintegration. While this process will only identify a line of possible interaction, by accumulating a large number of those lines, and through a tomographic reconstruction process, the original distribution can be estimated. In addition to the location of the two scintillation events, if accurate timing (within few hundred picoseconds) is available, a time-of-flight (TOF) calculation can add more information regarding the likely position of the event along the line. Limitations in the timing resolution of the scanner will determine the accuracy of the positioning along this line. Limitations in the determination of the location of the original scintillation events will determine the ultimate spatial resolution of the scanner, while the specific characteristics of the isotope (e.g., energy of the positron) will also contribute (via positron range and co-linearity of the two gamma rays) to the determination of the spatial resolution the specific agent.

The above described detection process must be repeated for a large number of annihilation events. While each imaging case must be analyzed to determine how many counts (i.e., paired events) are required to support the imaging task, current practice dictates that a typical 100-cm long, FDG (fluoro-deoxyglucose) study will need to accumulate several hundred million counts. The time required to accumulate this number of counts is determined by the injected dose of the agent and the sensitivity and counting capacity of the scanner.

PET imaging systems use detectors positioned across from one another to detect the gamma rays emitting from the object. Typically a ring of detectors is used in order to detect gamma rays coming from each angle. Thus, a PET scanner is typically substantially cylindrical to be able to capture as much radiation as possible, which should be, by definition, isotropic. Once the overall geometry of the PET scanner is known, another challenge is to arrange as much scintillating material as possible in the gamma ray paths to stop and convert as many gamma rays as possible into light. In order to be able to reconstruct the spatio-temporal distribution of the radio-isotope via tomographic reconstruction principles, each detected event will need to be characterized for its energy (i.e., amount of light generated), its location, and its timing. Most modern PET scanners are composed of several thousand individual crystals, which are arranged in modules and are used to identify the position of the scintillation event. Typically crystal elements have a cross section of roughly 4mm x 4mm. Smaller or larger dimensions and non-square sections are also possible. The length or depth of the crystal will determine how likely the gamma ray will be captured, and typically ranges from 10 to 30mm. The detector module is the main building block of the scanner.

PET imaging relies on the conversion of gamma rays into light through fast and bright scintillation crystals. After determining the interaction position in the scintillator and time pairing of individual events, the location of the annihilation process can be recreated. These actions require very fast components - detector and electronics - and they also require excellent signal to noise ratio. With high quality electronics, the signal to noise ratio is mainly determined by the inherent Poisson statistics involved in the detection process. Detecting more photons will result in improved signal-to-noise-ratio, and, therefore, better spatial and timing resolution. No improvement in detector design and electronics can compensate for significant loss of light in the detection process. The fraction of the total amount of light collected (relative to the amount created in the scintillator) is a good measure of the efficiency of the design. So to maximize the amount of light collected, one would try to get the light sensor as close as possible to the scintillation crystal and avoid reflections and other edge effects. This would then force the arrangement to be large array detector with short distance between crystal and sensor.

As described above, a PET imaging system is more than just a counter and, in addition to detecting the presence of a scintillation event, the system must identify its location. Conceptually, perhaps the most straightforward design to allow identification of the location of each interaction is to have a separate photosensor and data acquisition channel for each scintillator crystal. Due to constraints such as the physical size of common photosensors, the power required for each data acquisition channel, and the associated cost of these items, some form of multiplexing is usually used to reduce the number of photosensors and channels of electronics.

By properly documenting how light is being distributed to the multiple light sensors, it is possible to assign an event location for any given set of sensor responses. Light therefore needs to be distributed to multiple sensors. In order to accomplish an adequate light distribution (so that enough sensors would detect a fraction of the light) it may be necessary to increase the thickness of the light guide or space between the crystals and the sensor. However, fast counting requires that multiple events be processed simultaneously, favoring optical isolation between scintillation events, and the creation of smaller detector blocks. These two requirements are pushing the detector design in two different directions.

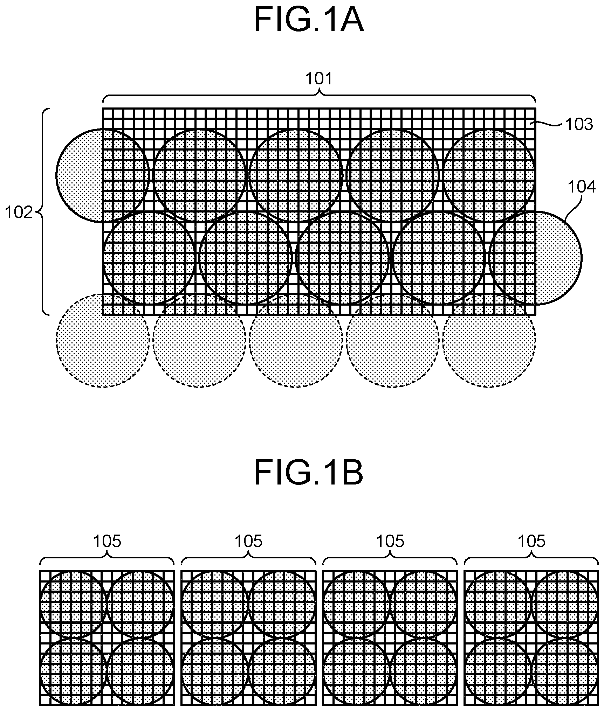

Currently available PET scanners have two main detector module designs. The first type is a large area detector in which an array of crystals that covers the entire axial extent of the cylinder is formed. Several modules are then arranged together to form a cylinder, each module being optically coupled to the next. An array of photosensors (e.g., photomultiplier tubes or PMTs) is placed on the modules and on the interfaces between modules. See the design shown in Figure 1A, which illustrates a module that includes an array 101 of crystal elements and an array 102 of PMTs. The array 101 includes a plurality of crystal elements 103 and the array 102 includes a plurality of PMTs 104. This approach minimizes the number of optical interfaces and boundaries, and ensures excellent light collection. However, this design suffers from larger numbers of sensors being exposed to the light of a single scintillation event, potentially limiting the ability to process events occurring close to each other, as well as limiting the overall counting capacity.

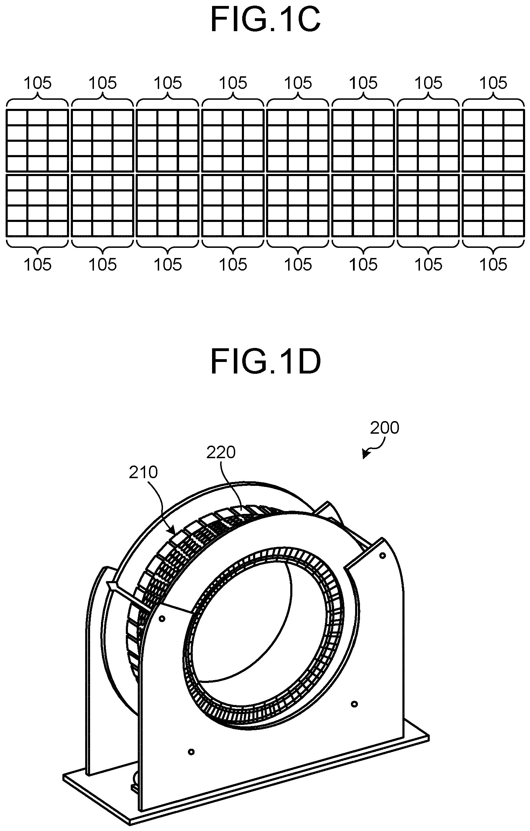

The second design is based upon an optically isolated block having, for example, four PMT sensors, so as to allow for simplified crystal identification. In the design of Figure 1B, a block element 105 is composed of four photomultiplier tube sensors on an approximately 50mm x 50mm crystal assembly. In this approach, the crystals extend to the very edge of the array and a relatively thick light guide is therefore often used to capture enough light from all PMTs to be able to detect the position of the event. A detector is then formed by arranging multiple blocks (e.g., three or four) to fill out the axial extent, and then repeating this pattern to create the overall cylinder. See the designs shown in Figures 1B and 1C. The advantages of this approach include greater flexibility (the detector block is potentially fully functional outside of the scanner (meaning that the detector block can be tested and calibrated separately, as opposed to the large area, continuous detector that can only be tested and calibration as part of a complete system - offering advantages for service at the customer site and for manufacturing of the scanner)) and better count capacity due to the potential parallel operation of each module. The disadvantages of this design are the inclusion of a large number of optical surfaces, potentially interfering with efficient light collection, and a more limited set of options for sensor coverage.

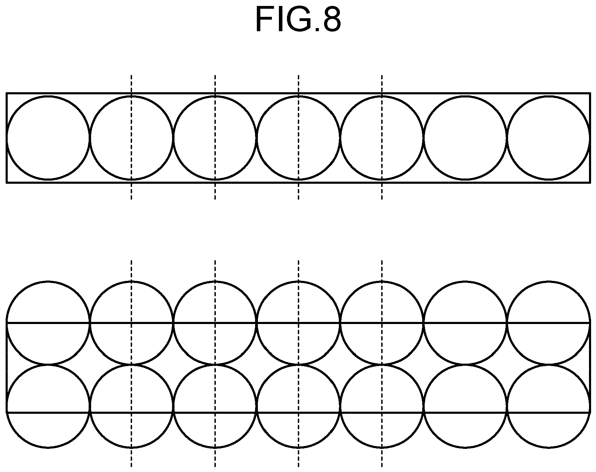

As shown in the bottom of Figure 8, in one design of the conventional art, an array of overlapping PMTs is arranged over small 2D crystal arrays. In this case, four quadrants from four sensors cover each crystal array. However, for this design, there is no means to manage the edges and the concept seems to be better adapted to covering large surfaces. Further, modern PET systems with ToF capabilities use mostly 1 and 1 ½ inch PMTs, which implies a large number of very small arrays. In addition, this design has no equivalent implementation in a long and narrow detector. The 1D version shown in the top of Figure 8, with one sensor sharing half of its surface with two adjacent sub-arrays simply does not carry enough information to perform 2D positioning.

For example, quadrant sharing can be implemented in two ways.

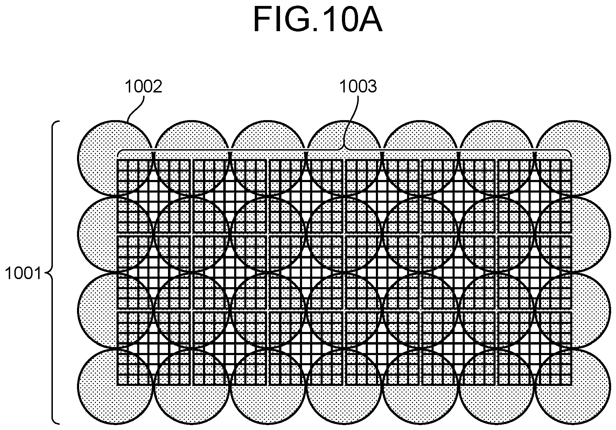

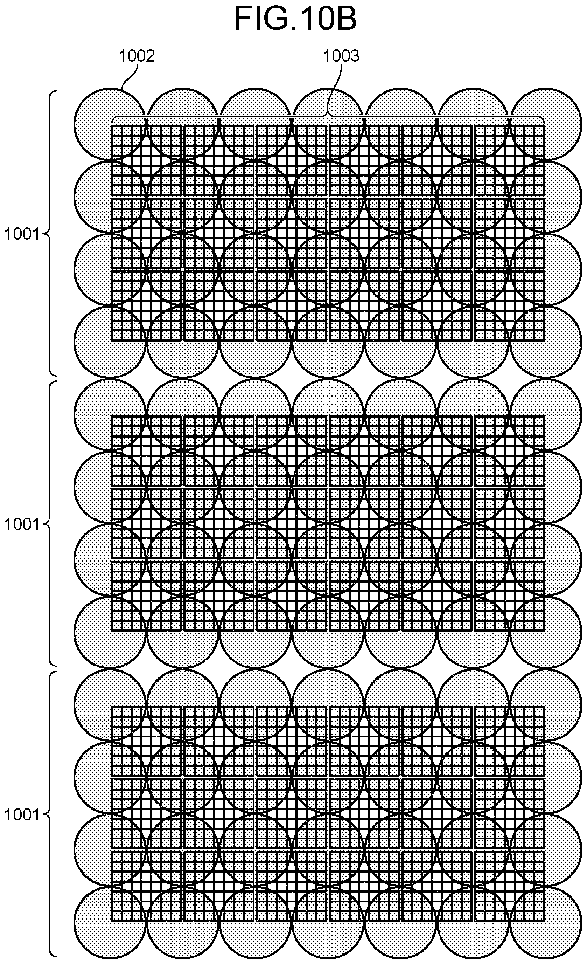

In the independent module quadrant sharing approach, adjacent independent modules, such as the module 101 shown in Figure 10A, are not optically coupled and do not share any PMTs 1002. As shown in Figure 10B, scintillator arrays 1003 of independent quadrant sharing modules 1001 cannot be placed closer than approximately the width of one photosensor (PMT). The large gaps between adjacent modules in the independent quadrant sharing approach are a major disadvantage of that approach. Moreover, the independent module quadrant sharing approach on a long and narrow array would be terribly inefficient and would clearly prevent close packing.

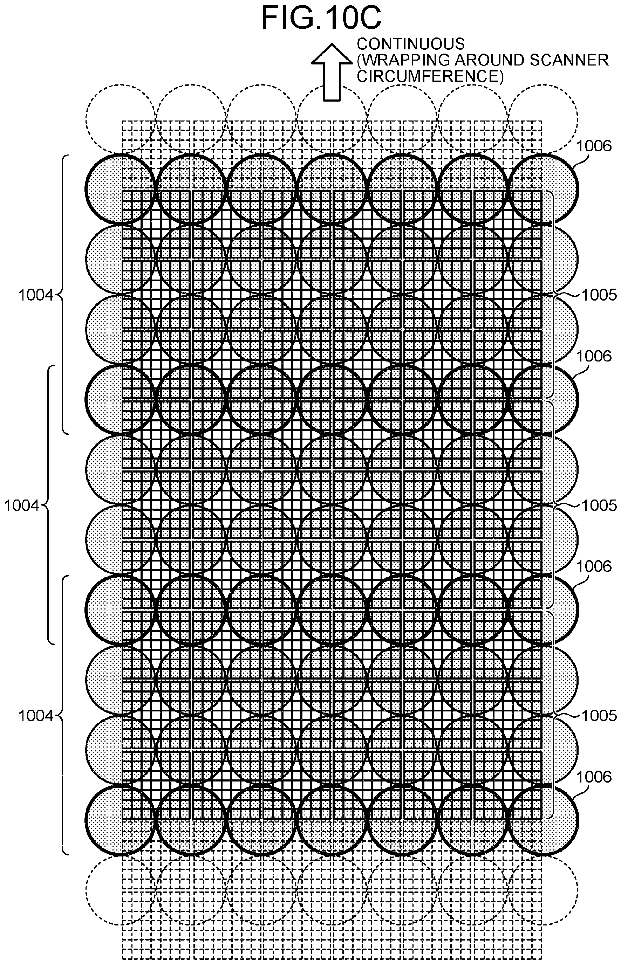

In the continuous quadrant sharing approach, as shown in Figure 10C, the detector is essentially continuous around the entire circumference of the ring. In this approach, scintillator arrays 1005 of quadrant sharing modules 1004 can be placed closer if they share PMTs, thereby losing their independence. In this case, the modules essentially become a single continuous detector in which some PMTs 1006 are shared between modules. The loss of independence of the modules in the continuous quadrant sharing approach means that the detector is only fully functional once every detector module has been installed, and modules cannot be fully tested and calibrated before installation. The continuous quadrant sharing approach does not allow for the production and testing of fully functional independent units prior to inclusion of the units in the scanner, and also does not allow for replacement of an independent module when part of the detector fails. This is a significant practical disadvantage for the continuous quadrant sharing approach.

WO 03/065074 A1 discloses an arrangement of scintillation crystals. WO 03/040757 A2 discloses a method and an apparatus to prevent signal pile-up. US 5,032,728 A discloses a single photon emission computed tomography system for producing transaxial images in a plurality of transaxial planes through a body. US 7,180,074 B1 discloses a body scanning system including a CT transmitter and a PET.

### BRIEF DESCRIPTION OF THE DRAWINGS

A more complete appreciation of the invention and many of the attendant advantages thereof will be readily obtained as the same becomes better understood by reference to the following detailed description when considered in connection with the accompanying drawings, wherein:
FIGs. 1A, 1B, and 1C illustrate conventional PET detector module designs in which photosensors are arranged to cover scintillation arrays;
FIG. 1D illustrates a PET scanner ring having a plurality of detector modules;
FIG. 2 illustrates one embodiment of a detector module, which includes a support structure, a scintillator array, a light guide, and an arrangement of PMTs;
FIG. 3 illustrates a radiation detector including a plurality of adjacent modular detector segments, each segment including a crystal array and a light guide;
FIG. 4 illustrates trigger zones and a comparison of the light distribution for two events in segmented and non-segmented configuration;
FIG. 5 illustrates crystal sub-arrays and corresponding light guide pieces in a 20 cm FOV embodiment;
FIG. 6 illustrates crystal sub-arrays and corresponding light guide pieces in a 32 cm FOV embodiment;
FIG. 7 illustrates segmented detector modules according to alternative examples;
FIG. 8 illustrates conventional detector modules;
FIG. 9 illustrates the steps in a method of manufacturing a radiation detector module according to one embodiment;
FIGs. 10A-10C illustrate conventional quadrant sharing designs; and
FIGs. 11A and 11B illustrate an independent-module, continuous quadrant-sharing embodiment.

### DETAILED DESCRIPTION

The present disclosure relates to a PET detector module according to claim 1, a radiation detector according to claim 6, a method of processing signals using a positron emission tomography (PET) detector module according to claim 11, and a method of manufacturing a radiation detector module according to claim 13.

Referring now to the drawings, Figure 1D illustrates a PET scanner design 200 according to one embodiment. As shown in Figure 1D, a detector ring 210 includes a number of rectangular detector modules 220. According to one embodiment, the detector ring 210 includes 40 detector modules 220. In another embodiment, 48 modules are used to create a larger bore size for the scanner.

A PET detector module includes an array of scintillation crystal elements and a plurality of photosensors. The array of the scintillation crystal elements includes a plurality of substantially optically isolated sub-arrays. The plurality of photosensors are arranged to cover the array of crystal elements and configured to receive light emitted from the array of crystal elements. The sub-arrays are optically isolated so that light emitted from an individual scintillation crystal located in a corresponding sub-array is concentrated so as to be primarily received only by those photosensors of the plurality of photosensors that cover the corresponding sub-array. At least one photosensor of the plurality of photosensors, which receives light emitted from crystals in a first sub-array, also receives light emitted from crystals in one and only one sub-array that is adjacent to the first sub-array.

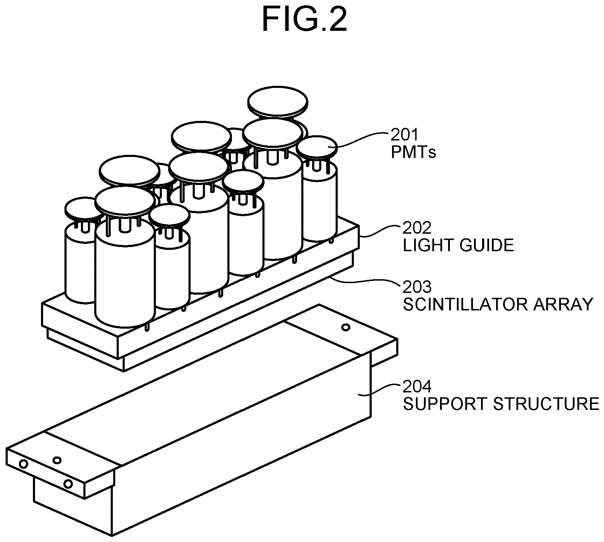

For example, Figure 2 illustrates a detector module design that includes a support structure 204 and a two-dimensional array of individual detector crystals 203, which absorb the gamma radiation and emit scintillation photons, which are detected by the photomultiplier tubes. A light guide 202 is disposed between the array of detector crystals and the photomultiplier tubes (PMTs) 201. As shown in Figure 2, each detector module includes a number of PMTs 201 of various sizes, each of which covers a plurality of detector crystals. Each PMT 201 produces an analog signal which rises sharply when a scintillation event occurs, and then tails off exponentially. The photons emitted from one detector crystal can be detected by more than one PMT 201. However, based on the analog signal produced at each PMT 201, the detector crystal corresponding to an event can be determined.

The detector module shown in Figure 2 is narrow and long. Typically, the long axis is more than 3-4 times longer than the short axis. This design minimizes the ratio of crystals on the edge of the modules to crystals in the interior of the module and still produces a large enough multiplicity of independent modules to ensure an adequate counting capacity. Since each module is optically isolated and photosensors are not shared between adjacent modules, each module can be calibrated independently.

The detector module arrangement of Figure 2 provides a compromise between creating as many optically independent modules as possible to maximize count rate and creating a large continuous detection surface to maximize light collection and minimize edge effects.

The configuration of Figure 2 still contains a fair amount of light sharing and light contamination along the long axis of the detector. Additionally, construction of the large structure shown in Figure 2, with detailed optics requirement, may present some manufacturing challenges.

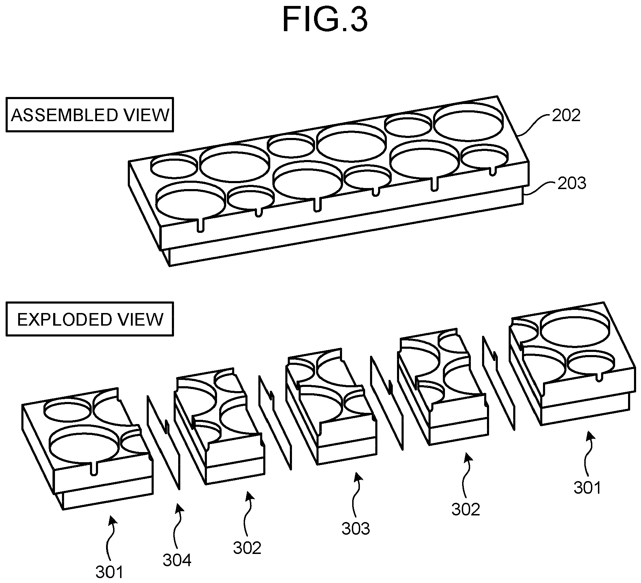

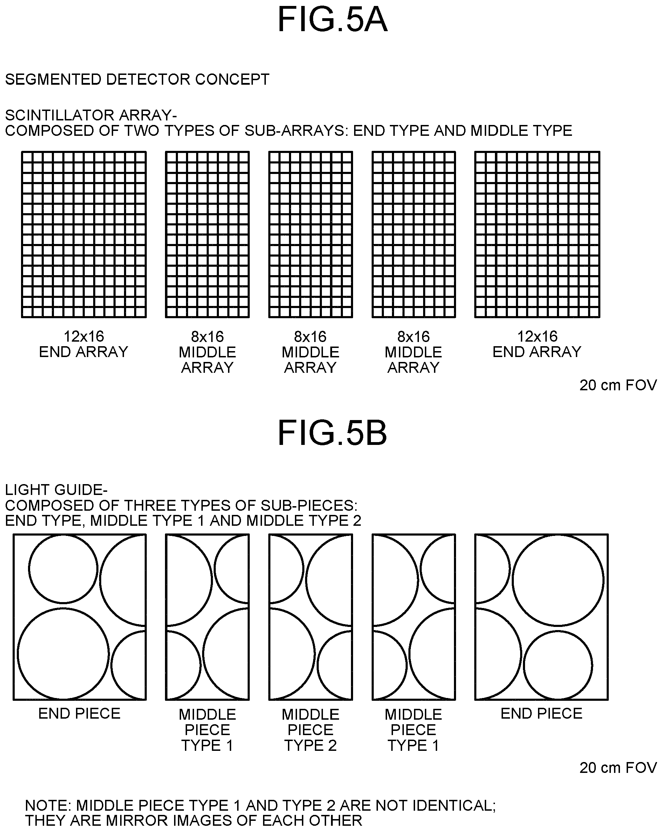

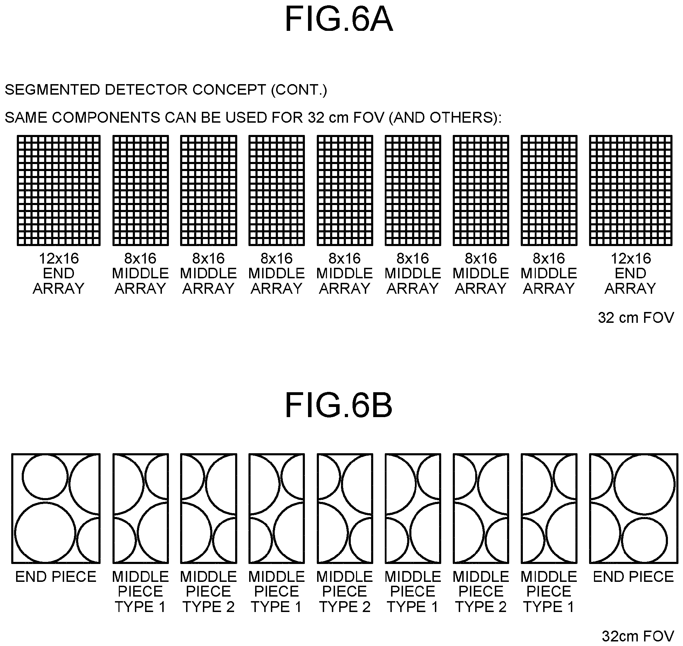

For example, one embodiment described herein is directed to a method of manufacturing the long and narrow detector module shown in Figure 2 using modular segments. As shown in Figure 3, by segmenting the crystal array 203 and light guide 202, better performance and easier manufacturability can be achieved. In one embodiment, the crystal array 203 and light guide 202 are segmented over the center line joining two PMTs. In the embodiment shown in Figure 3, three types of segments are used, each segment including a crystal sub-array and a corresponding light guide sub-piece. One type of segment in this embodiment is an end-type segment 301, described in more detail below with respect to Figures 5 and 6. The other types of segments in this embodiment are middle-type segments 302 and 303, which are also shown in Figures 5 and 6.

As described above, the detector module includes, for example, at least five modular detector segments. Each of the detector segments includes, for example, a first segment, a second segment, a third segment, a fourth segment, and fifth segment. The first segment includes an end-type array of scintillation crystal elements and an end-type light guide. The second segment includes a middle-type array of scintillation crystal elements and a first middle-type light guide. The third segment includes the middle-type array of scintillation crystal elements and a second middle-type light guide. The fourth segment includes the middle-type array of scintillation crystal elements and the first middle-type light guide. The fifth segment includes the end-type array of scintillation crystal elements and the end-type light guide.

The detector module further includes reflector elements configured to substantially concentrate the light emitted from the individual scintillation crystal element in the corresponding sub-array so the emitted light is primarily received only by those photosensors of the plurality of photosensors that cover the corresponding sub-array.

Further, each sub-array included in the array of the scintillation crystal elements is covered by respective portions of a corresponding group of four photosensors of the plurality of photosensors. Light from any individual scintillation crystal located in a corresponding sub-array is concentrated so as to be primarily received only by the respective portions of the corresponding group of four photosensors. At least two photosensors of the plurality of photosensors, which receives light emitted from crystals in the first sub-array, also receives light emitted from crystals in one and only one sub-array that is adjacent to the first sub-array.

Furthermore, the detector module further includes a signal processing device configured to aggregate, for each scintillation event, output signals from each photosensor in a trigger zone of a plurality of overlapping trigger zones defined for the module, each trigger zone including a plurality of photosensors of the plurality of photosensors. At least one photosensor, which receives light from adjacent sub-arrays, belongs to two trigger zones.

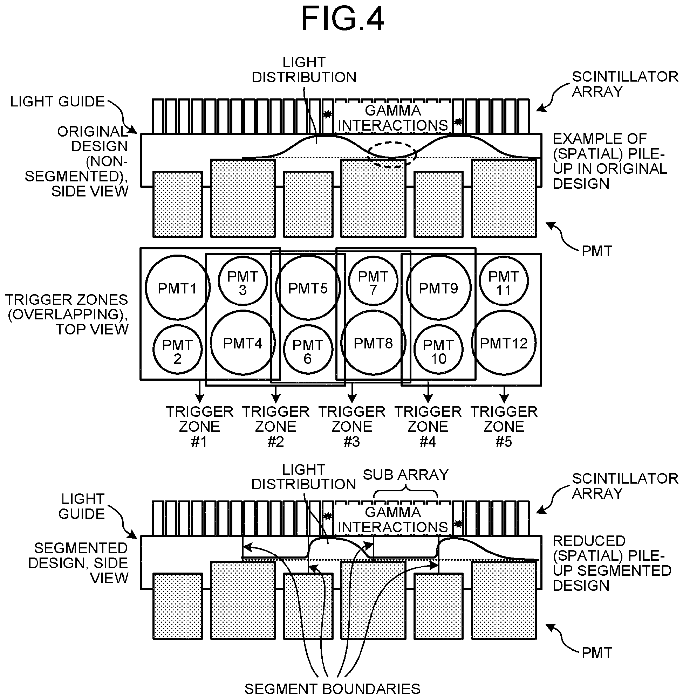

For example, in this embodiment, each sub-array is optically isolated by attaching reflective material 304 around each crystal sub-array shown in Figure 3. Several advantages result from this. First, light from one sub-array will stay on the same array and will decrease the overlap or contamination of adjacent sub-arrays, as discussed below with respect to Figure 4. Second, each scintillation event will always affect only four PMTs. In this embodiment, the signals from all PMTs in a group of four are connected to form a trigger zone (i.e., the PMTs that are summed in the analog domain to generate the timing trigger signal). For example, Figure 4 shows five trigger zones, with PMTs 1-4 forming a first trigger zone, PMTs 3-6 forming a second trigger zone, etc.

Having small trigger zones, as in this embodiment, is an advantage with respect to timing resolution. For example, the pre-amplifier on each PMT channel adds some noise to the signal, so reducing the total number of channels in the trigger zone reduces the total noise. Light that spreads beyond the four-PMT region does not contribute to the timing signal. In this embodiment, essentially all of the scintillation light from a gamma event is confined to a single trigger zone. The increased signal-to-noise ratio results in improved timing resolution. Since the boundaries of the over-lapping trigger zones align with the center of the light sensors, the boundaries (seams) of the segments must also align with the center of the light sensors to fully realize this benefit.

Moreover, two events can be processed at the same time provided that the events do not share any PMTs, which is accomplished as soon as there are one or more sub-arrays between the two events under consideration. The events are processed using a combination of analog and digital electronics to produce an estimate of the arrival time, the energy, and the interaction position for each gamma ray. In most conventional gamma ray detection systems, the timing is derived by generating a composite timing signal by analog summation of signals from a number of PMTs. Next, a leading-edge or constant-fraction discriminator is applied to the composite signal.

The PMTs whose signals are summed are often referred to as a "trigger zone," which may overlap or which may be kept separate. In one embodiment, the trigger zones overlap. In addition to being used to derive the arrival time of an event, the summed signal for each trigger zone usually initiates the acquisition or processing of energy and position information. Generally, each PMT is connected to an independent channel of electronics which typically includes a shaping filter and an analog-to-digital converter. When the acquisition is triggered, the PMT signals for each PMT in the trigger zone are integrated over a pre-determined time window. The integrated PMT signals are then digitally summed to produce an estimate of the energy of the event, and a centroid calculation using these signals is used to estimate the interaction position. Modern systems include multiple corrections, often based on stored look-up tables, to further improve the timing, energy, and position estimate.

As described above, in a method of processing signals using the detector module, the detector module detects a first scintillation event from a first sub-array of the plurality of sub-arrays. The detector module then detects a second scintillation event from a second sub-array of the plurality of sub-arrays, wherein the first and second sub-arrays are separated by at least one sub-array. The signal processing device then analyzes first signals from each photosensor involved in the first scintillation event, and simultaneously, analyzes second signals from each photosensor involved in the second scintillation event when the first and second sub-arrays are separated by at least one sub-array.

Further, the signal processing device, when analyzing the first signals and the second signals, determines a first position, a first energy, and a first arrival time for the first scintillation event. The signal processing device then determines a second position, a second energy, and a second arrival time for the second scintillation event.

Further, as illustrated in the bottom of Figure 4, the light from one scintillation event will be channeled to fewer sensors, increasing the statistical quality of the detection, which results in better timing information. In the non-segmented design shown in the top of Figure 4, the light distribution from two events can overlap (mutual interference or pile-up), especially at high count rates, which decreases the quality of the detection.

Additionally, the segmented approach of Figure 3 provides easier and more cost-effective manufacturability. Since the crystal is by far the most expensive component of the scanner, production yield on crystal arrays should be higher since a faulty or otherwise under-performing array could be rejected with a smaller impact on cost, since the faulty array affects is only a small sub-array.

Further, the crystal sub-arrays and the light guide pieces for the different segments can be optically coupled (e.g., glued together) and inspected independently. Thus, a problem with one segment can be fixed without remanufacturing the entire detector module. In addition, small crystal sub-arrays are easier to manufacture and handle, which should lead to a cost reduction.

Further, variable sized detector modules can be created and easily maintained with the same set of sub-arrays. For instance, a 20 cm long detector can be manufactured using two types of crystal sub-arrays (two 12x16 end arrays and three 8x16 middle arrays) and three types of light guide sub-pieces (an end piece and two types of middle pieces), as shown in Figure 5. In addition, as shown in Figure 6, a 32 cm detector module can be manufactured using the same sub-arrays (two 12x16 end arrays and seven 8x16 middle arrays) and the same light guide sub-pieces. In particular, the 32 cm detector module uses four middle pieces of the first type and three middle pieces of the second type, in addition to the two end pieces. Other sizes of crystal sub-arrays and other combinations or sizes of light guide pieces are possible.

As described above, for example, The detector module includes exactly nine modular detector segments. Further, for example, the detector module includes an odd number of middle modular detector segments and two end modular detector segments.

Again, because the crystal is an expensive component, manufacturing processes using shared components between different types of scanners and building the required proportion of each type according to live market conditions should be much more efficient.

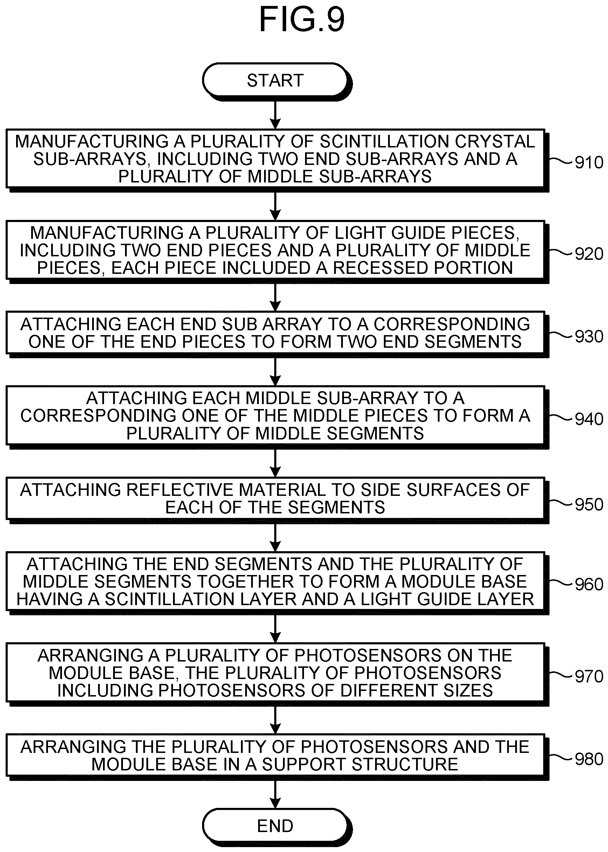

Figure 9 illustrates the steps in a method of manufacturing a radiation detector module according to one embodiment.

In step 910, a plurality of scintillation crystal sub-arrays, including two end sub-arrays and a plurality of middle sub-arrays is manufactured. See Figures 5 and 6, for example.

In step 920, a plurality of light guide pieces, including two end pieces and a plurality of middle pieces are manufactured. For example, see Figure 3, which illustrates that each light guide piece includes at least one recessed portion for holding portions of one or more PMTs.

In step 930, each end sub array is attached to a corresponding one of the end light guide pieces to form two end segments.

In step 940, each middle sub-array is attached to a corresponding one of the middle pieces to form a plurality of middle segments. For example, see Figures 3, 5, and 6.

In step 950, reflective material is attached to side surfaces of each of the end and middle segments.

In step 960, the end segments and the plurality of middle segments are attached together, for example in the order shown in one of Figures 5 and 6, to form a module base having a scintillation layer and a light guide layer.

In step 970, a plurality of photosensors is arranged on the module base using the recessed portions to hold the photosensors in place, wherein the plurality of photosensors can include photosensors of different sizes.

In step 980, the plurality of photosensors and the module base is arranged in the support structure 204 shown in Figure 2.

Further, for example, the step 920 may include a step of forming, in each light guide piece, at least two recessed portions for holding respective photosensors of different sizes, and the step 970 may include a step of arranging a plurality of photosensors on the module base, the plurality of photosensors including photosensors of different sizes.

Furthermore, for example, the step 920 may include a step manufacturing at least one middle piece of a first type and at least one middle piece of a second type.

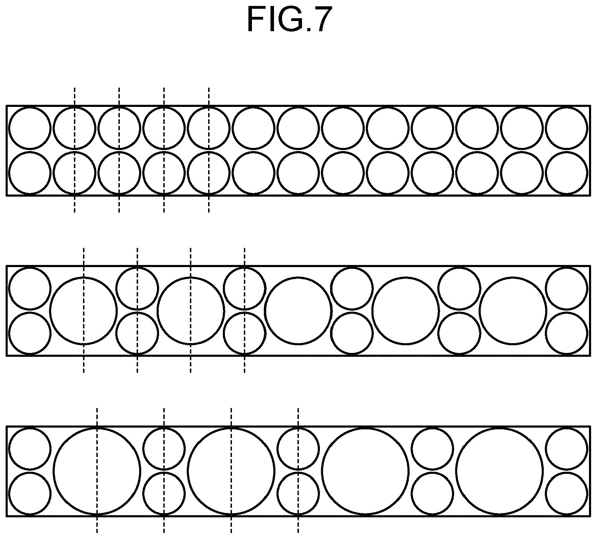

As an example, the concepts discussed above can be applied to other configurations using the rule that each sub-array needs to be connected to the smallest number of sensors necessary to perform the positioning calculation. For example, as shown in Figure 7, the minimum number of sensors required is four for the top configuration, while the minimum number of sensors required is three for the lower two designs shown in Figure 7. We note that the dotted lines shown in Figure 7 indicate how the module is segmented, but that not all of the segments are shown.

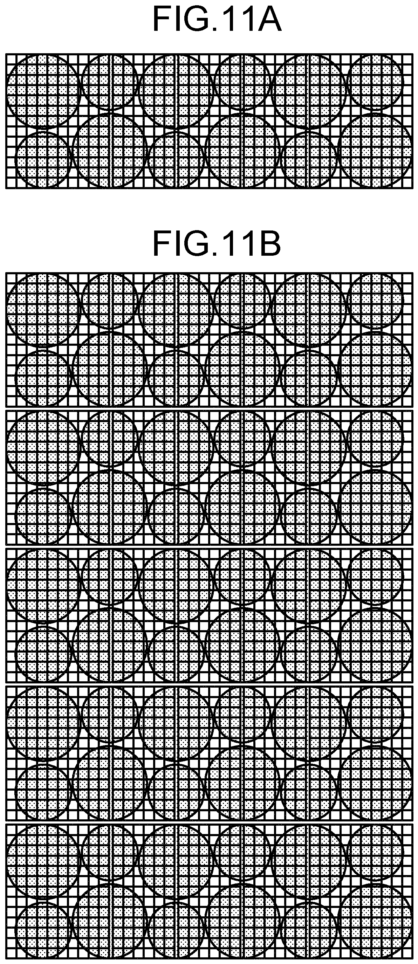

Figures 11A and 11B illustrate a segmented design allowing for a plurality of independent modules (as shown for example in Figure 11A) to be placed close together with minimal gaps there between, while retaining their independence, as shown in Figure 11B. In particular, the gap between modules in Figure 11B is significantly smaller than the width of a photosensor, and comparable to a single crystal width or smaller, e.g., less than four mm.

As described above, the plurality of detector modules are independent and are arranged closer to one another than the width of one of the photosensors so as to form the cylindrical detector ring. Further, the plurality of detector modules are independent and are arranged less than four mm between one another so as to form the cylindrical detector ring.

This arrangement is possible because at least one photosensor (of the plurality of photosensors in the module), which receives light emitted from crystals in a first sub-array, also receives light emitted from crystals in one and only one sub-array that is adjacent to the first sub-array. Unlike the conventional quadrant sharing approach, in which a single photosensor is shared between more than two sub-arrrays (i.e., the photosensors are shared between sub-arrays spanning two orthogonal directions), in the present embodiment, the photosensors are only shared in one direction and between at most two sub-arrays.

The arrangement shown in Figure 11B is a practical advantage of the segmented module approach because each module can be fully tested and calibrated before installation in the scanner. Also, when a module has to be replaced, the replacement is faster because the replacement module does not have to be optically coupled to the neighboring modules and the module can be pre-calibrated prior to installation.

In one embodiment, the sensor array is substantially the same size as the crystal array, which imposes restrictions on the size of the assembly. In one embodiment, the crystal array has to be substantially the size of the sensor diameter, or a little smaller to account for manufacturing and assembly tolerances.

As discussed above, embodiments disclosed herein offers a cost reduction, an increase in the total amount of light available for detection, and good performance at high count rates.

While certain embodiments have been described, these embodiments have been presented by way of example only, and are not intended to limit the scope of the inventions. Indeed the novel methods and systems described herein may be embodied in a variety of other forms, provided they fall within the scope of the invention as defined by the appended claims. It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A positron emission tomography (PET) detector module (220), comprising:
an array (203) of scintillation crystal elements, the array including a plurality of substantially optically isolated sub-arrays; and
a plurality of round-shaped first photosensors (201) and a plurality of round-shaped second photosensors (201) that are each larger than the first photosensors (201), wherein the first and second photosensors (201) are arranged to cover the array (203) of crystal elements and configured to receive light emitted from the array (203) of crystal elements, wherein each photosensor (201) of the first and second photosensors (201) is arranged to cover a portion of at most two sub-arrays and the first and second photosensors (201) are only shared in one direction,
wherein the sub-arrays are optically isolated so that light emitted from an individual scintillation crystal located in a corresponding sub-array is concentrated so as to be received only by those photosensors (201) of the first and second photosensors (201) that cover the corresponding sub-array; and
at least one pair of a first photosensor (201) and a second photosensor (201) of the first and second photosensors (201), which receives light emitted from crystals in a first sub-array, also receives light emitted from crystals in one and only one sub-array that is adjacent to the first sub-array.

2. The PET detector module (220) of claim 1, wherein
each sub-array is covered by respective portions of a corresponding group of two pairs of a first photosensor (201) and a second photosensor (201) of the first and second photosensors (201);
light from any individual scintillation crystal located in a corresponding sub-array is concentrated so as to be received only by the respective portions of the corresponding group of the two pairs of the first photosensor (201) and the second photosensor (201); and
the at least one pair of the first photosensor (201) and the second photosensor (201) of the first and second photosensors (201), which receives light emitted from crystals in the first sub-array, also receives light emitted from crystals in one and only one sub-array that is adjacent to the first sub-array.

3. The PET detector module (220) of claim 1 or 2, further comprising:
a signal processing device configured to aggregate, for each scintillation event, output signals from the first and second photosensors (201) in a trigger zone, wherein the trigger zone is formed by a group of four photosensors (201) of the first and second photosensors (201) that cover the corresponding sub-array.

4. The PET detector module (220) of claim 1 or 2, further comprising:
a signal processing device configured to aggregate, for each scintillation event, output signals from each photosensor (201) in a trigger zone of a plurality of overlapping trigger zones defined for the module (220), each trigger zone including first and second photosensors (201) of the plurality of first and second photosensors (201), wherein at least one pair of first and second photosensors (201), which receives light from adjacent sub-arrays, belongs to two trigger zones.

5. The PET detector module (220) of any of claims 1 to 4, further comprising:
reflector elements configured to substantially concentrate the light emitted from the individual scintillation crystal element in the corresponding sub-array so the emitted light is received only by those photosensors (201) of the first and second photosensors (201) that cover the corresponding sub-array.

6. A radiation detector, comprising:
a plurality of adjacent detector segments (301, 302, 303), each segment (301, 302, 303) including
a segmented array of scintillation crystal elements;
a segmented light guide arranged adjacent to the array of scintillation crystal elements; and
reflectors (304) arranged around a periphery of the segment so that light produced by a scintillation event in the segment is substantially confined to the segment,
wherein each segment (302, 303) is coupled to a round-shaped first photosensor (201) and a round-shaped second photosensor (201) that is larger than the first photosensor (201), wherein the first and second photosensors (201) are arranged to cover the plurality of adjacent detector segments, wherein each photosensor (201) of the first and second photosensors (201) is arranged to cover a portion of at most two of the segments (301, 302, 303) and the first and second photosensors (201) are only shared in one direction.

7. The radiation detector of claim 6, wherein the detector (220) comprises at least five detector segments (301, 302, 303) including
a first segment (301) including an end-type array of scintillation crystal elements and an end-type light guide;
a second segment (302) including a middle-type array of scintillation crystal elements and a first middle-type light guide;
a third segment (303) including the middle-type array of scintillation crystal elements and a second middle-type light guide;
a fourth segment (302) including the middle-type array of scintillation crystal elements and the first middle-type light guide; and
a fifth segment (301) including the end-type array of scintillation crystal elements and the end-type light guide.

8. The radiation detector of claim 6 or 7, wherein the detector (220) includes exactly nine detector segments, or wherein the detector (220) includes an odd number of middle detector segments (302, 303) and two end detector segments (301).

9. A positron emission tomography (PET) scanner system (200), comprising:
a plurality of detector modules (220) arranged adjacent to one another to form a cylindrical detector ring (210), wherein each of the detector modules (220) includes a radiation detector according to any of claims 6 to 8.

10. The PET scanner system (200) of claim 9, wherein the plurality of detector modules (220) are independent and are arranged closer to one another than the width of one of the photosensors (201) so as to form the cylindrical detector ring (210), and/or wherein the plurality of detector modules (220) are independent and are arranged less than four mm between one another so as to form the cylindrical detector ring (210).

11. A method of processing signals using a positron emission tomography (PET) detector module (220) that includes an array (203) of scintillation crystal elements, the array (203) including a plurality of substantially optically isolated sub-arrays, and a plurality of round-shaped first photosensors (201) and a plurality of round-shaped second photosensors (201) that are each larger than the first photosensors (201), wherein the first and second photosensors (201) are arranged to cover the array (203) of crystal elements and configured to receive light emitted from the array (203) of crystal elements, wherein each photosensor (201) of the first and second photosensors (201) is arranged to cover a portion of at most two sub-arrays and the first and second photosensors (201) are only shared in one direction, wherein the detector module (220) is one of a plurality of detector modules forming a cylindrical detector ring (210), the method comprising:
detecting a first scintillation event from a first sub-array of the plurality of sub-arrays within the detector module (220);
detecting a second scintillation event from a second sub-array of the plurality of sub-arrays, wherein the first and second sub-arrays are separated by at least one sub-array within the detector module (220); and
analyzing first signals from each photosensor (201) involved in the first scintillation event, and simultaneously, analyzing second signals from each photosensor (201) involved in the second scintillation event when the first and second sub-arrays are separated by at least one sub-array within the detector module (220).

12. The method of claim 11, wherein the analyzing step comprises:
determining a first position, a first energy, and a first arrival time for the first scintillation event; and
determining a second position, a second energy, and a second arrival time for the second scintillation event.

13. A method of manufacturing a radiation detector module (220), comprising:
manufacturing a plurality of scintillation crystal sub-arrays, including two end sub-arrays and a plurality of middle sub-arrays;
manufacturing a plurality of light guide pieces, including two end pieces and a plurality of middle pieces;
attaching each end sub-array to a corresponding one of the end pieces to form two end segments (301);
attaching each middle sub-array to a corresponding one of the middle pieces to form a plurality of middle segments (302, 303);
attaching reflective material (304) to a side surface of at least one of the middle segments (302, 303); and
attaching the end segments (301) and the plurality of middle segments (302, 303) together to form a module base having a scintillation layer (203) and a light guide layer (202),
wherein the radiation detector module (220) includes a plurality of round-shaped first photosensors (201) and a plurality of round-shaped second photosensors (201) that are each larger than the first photosensors (201), wherein the first and second photosensors (201) are arranged to cover the scintillation crystal sub-arrays and configured to receive light emitted from the scintillation crystal sub-arrays, wherein each photosensor (201) of the first and second photosensors (201) is arranged to cover a portion of at most two sub-arrays and the first and second photosensors (201) are only shared in one direction.

14. The method of claim 13, wherein the step of manufacturing the plurality of light guide pieces comprises forming, in each light guide piece, at least two recessed portions for holding respective first and second photosensors (201); and
the method further comprises arranging the first and second photosensors (201) on the module base.

15. The method of claim 13 or 14, wherein the step of manufacturing the plurality of light guide pieces, including the plurality of middle pieces, comprises:
manufacturing at least one middle piece of a first type and at least one middle piece of a second type.

## Patentansprüche

1. Positronenemissionstomographie-(PET)-Detektormodul (220), mit:
einer Anordnung (203) von Szintillationskristallelementen, welche Anordnung eine Mehrzahl im Wesentlichen optisch isolierter Unteranordnungen aufweist; und
einer Mehrzahl rundförmiger erster Photosensoren (201) und einer Mehrzahl rundförmiger zweiter Photosensoren (201), die jeder größer als die ersten Photosensoren (201) sind, bei dem die ersten und zweiten Photosensoren (201) zum Bedecken der Anordnung (203) von Kristallelementen angeordnet und dazu ausgebildet sind, Licht, das von der Anordnung (203) von Kristallelementen emittiert wird, zu empfangen, bei dem jeder Photosensor (201) der ersten und zweiten Photosensoren (201) zum Bedecken eines Abschnitts höchstens zweier Unteranordnungen angeordnet ist und die ersten und zweiten Photosensoren (201) lediglich in einer Richtung geteilt werden,
bei dem die Unteranordnungen optisch isoliert sind, so dass Licht, das von einem einzelnen Szintillationskristall emittiert wird, der in einer entsprechenden Unteranordnung gelegen ist, konzentriert wird, so dass es lediglich durch jene Photosensoren (201) der ersten und zweiten Photosensoren (201) empfangen wird, die die entsprechende Unteranordnung bedecken; und
mindestens ein Paar eines ersten Photosensors (201) und eines zweiten Photosensors (201) der ersten und zweiten Photosensoren (201), das Licht, das von Kristallen in einer ersten Unteranordnung emittiert wird, empfängt, auch Licht empfängt, das von Kristallen in einer und lediglich einer Unteranordnung, die an die erste Unteranordnung angrenzt, emittiert wird.

2. PET-Detektormodul (220) von Anspruch 1, bei dem
jede Unteranordnung durch jeweilige Abschnitte einer entsprechenden Gruppe zweier Paare eines ersten Photosensors (201) und eines zweiten Photosensors (201) der ersten und zweiten Photosensoren (201) bedeckt wird;
Licht von einem individuellen Szintillationskristall, der in einer entsprechenden Unteranordnung gelegen ist, konzentriert wird, so dass es lediglich durch die jeweiligen Abschnitte der entsprechenden Gruppe der zwei Paare des ersten Photosensors (201) und des zweiten Photosensors (201) empfangen wird; und
das mindestens eine Paar des ersten Photosensors (201) und des zweiten Photosensors (201) der ersten und zweiten Photosensoren (201), das Licht, das von Kristallen in der ersten Unteranordnung emittiert wird, empfängt, auch Licht empfängt, das von Kristallen in einer und lediglich einer Unteranordnung, die an die erste Unteranordnung angrenzt, emittiert wird.

3. PET-Detektormodul (220) von Anspruch 1 oder 2, ferner mit:
einer Signalverarbeitungsvorrichtung, die dazu ausgebildet ist, für jedes Szintillationsereignis Ausgangssignale von den ersten und zweiten Photosensoren (201) in einer Auslösezone zu sammeln, bei dem die Auslösezone durch eine Gruppe von vier Photosensoren (201) der ersten und zweiten Photosensoren (201), die die entsprechende Unteranordnung bedecken, ausgebildet ist.

4. PET-Detektormodul (220) von Anspruch 1 oder 2, ferner mit:
einer Signalverarbeitungsvorrichtung, die dazu ausgebildet ist, für jedes Szintillationsereignis Ausgangssignale von jedem Photosensor (201) in einer Auslösezone einer Mehrzahl überlappender Auslösezonen, die für das Modul (220) definiert sind, zu sammeln, von denen jede Auslösezone erste und zweite Photosensoren (201) der Mehrzahl erster und zweiter Photosensoren (201) aufweist, bei dem mindestens ein Paar erster und zweiter Photosensoren (201), das Licht von angrenzenden Unteranordnungen empfängt, zu zwei Auslösezonen gehört.

5. PET-Detektormodul (220) von einem der Ansprüche 1 bis 4, ferner mit:
Reflektorelementen, die dazu ausgebildet sind, das Licht, das von dem einzelnen Szintillationskristallelement in der entsprechenden Unteranordnung emittiert wird, im Wesentlichen zu konzentrieren, so dass das emittierte Licht lediglich durch jene Photosensoren (201) der ersten und zweiten Photosensoren (201) empfangen wird, die die entsprechende Unteranordnung bedecken.

6. Strahlungsdetektor, mit:
einer Mehrzahl angrenzender Detektorsegmente (301, 302, 303), von denen jedes Segment (301, 302, 303)
eine segmentierte Anordnung von Szintillationskristallelementen;
einen segmentierten Lichtleiter, der angrenzend an die Anordnung von Szintillationskristallelementen angeordnet ist; und
Reflektoren (304), die um einen Umfang des Segments angeordnet sind, so dass Licht, das durch ein Szintillationsereignis in dem Segment hervorgerufen wird, im Wesentlichen auf das Segment beschränkt wird, aufweist,
bei dem jedes Segment (302, 303) an einen rundförmigen ersten Photosensor (201) und einen rundförmigen zweiten Photosensor (201), der größer als der erste Photosensor (201) ist, gekoppelt ist, bei dem die ersten und zweiten Photosensoren (201) zum Bedecken der Mehrzahl angrenzender Detektorsegmente angeordnet sind, bei dem jeder Photosensor (201) der ersten und zweiten Photosensoren (201) zum Bedecken eines Abschnitts höchstens zweier der Segmente (301, 302, 303) angeordnet ist und die ersten und zweiten Photosensoren (201) lediglich in einer Richtung geteilt werden.

7. Strahlungsdetektor von Anspruch 6, bei dem der Detektor (220) mindestens fünf Detektorsegmente (301, 302, 303) mit
einem ersten Segment (301), das eine Endtypanordnung von Szintillationskristallelementen und einen Endtyplichtleiter aufweist;
einem zweiten Segment (302), das eine Mitteltypanordnung von Szintillationskristallelementen und einen ersten Mitteltyplichtleiter aufweist;
einem dritten Segment (303), das die Mitteltypanordnung von Szintillationskristallelementen und einen zweiten Mitteltyplichtleiter aufweist;
einem vierten Segment (302), das die Mitteltypanordnung von Szintillationskristallelementen und den ersten Mitteltyplichtleiter aufweist; und
einem fünften Segment (301), das die Endtypanordnung von Szintillationskristallelementen und den Endtyplichtleiter aufweist, aufweist.

8. Strahlungsdetektor von Anspruch 6 oder 7, bei dem der Detektor (220) exakt neun Detektorsegmente aufweist, oder bei dem der Detektor (220) eine ungerade Anzahl mittlerer Detektorsegmente (302, 303) und zwei Enddetektorsegmente (301) aufweist.

9. Positronenemissionstomographie-(PET)-Scannersystem (200), mit:
einer Mehrzahl von Detektormodulen (220), die angrenzend aneinander zum Ausbilden eines zylindrischen Detektorrings (210) angeordnet sind, bei dem jedes der Detektormodule (220) einen Strahlungsdetektor gemäß einem der Ansprüche 6 bis 8 aufweist.

10. PET-Scannersystem (200) von Anspruch 9, bei dem die Mehrzahl von Detektormodulen (220) unabhängig ist und näher aneinander angeordnet ist als die Breite eines der Photosensoren (201), so dass sie den zylindrischen Detektorring (210) ausbildet, und/oder bei dem die Mehrzahl von Detektormodulen (220) unabhängig ist und weniger als vier mm zwischen einander angeordnet ist, so dass sie den zylindrischen Detektorring (210) ausbildet.

11. Verfahren zum Verarbeiten von Signalen unter Verwendung eines Positronenemissionstomographie-(PET)-Detektormoduls (220), das eine Anordnung (203) von Szintillationskristallelementen, welche Anordnung (203) eine Mehrzahl im Wesentlichen optisch isolierter Unteranordnungen aufweist, und eine Mehrzahl rundförmiger erster Photosensoren (201) und eine Mehrzahl rundförmiger zweiter Photosensoren (201), die jeder größer als die ersten Photosensoren (201) sind, aufweist, bei dem die ersten und zweiten Photosensoren (201) zum Bedecken der Anordnung (203) von Kristallelementen angeordnet und dazu ausgebildet sind, Licht, das von der Anordnung (203) von Kristallelementen emittiert wird, zu empfangen, bei dem jeder Photosensor (201) der ersten und zweiten Photosensoren (201) zum Bedecken eines Abschnitts höchstens zweier Unteranordnungen angeordnet ist und die ersten und zweiten Photosensoren (201) lediglich in einer Richtung geteilt werden, bei dem das Detektormodul (220) eines einer Mehrzahl von Detektormodulen ist, die einen zylindrischen Detektorring (210) ausbilden, welches Verfahren aufweist:
Erfassen eines ersten Szintillationsereignisses von einer ersten Unteranordnung der Mehrzahl von Unteranordnungen innerhalb des Detektormoduls (220);
Erfassen eines zweiten Szintillationsereignisses von einer zweiten Unteranordnung der Mehrzahl von Unteranordnungen, bei dem die ersten und zweiten Unteranordnungen durch mindestens eine Unteranordnung innerhalb des Detektormoduls (220) separiert sind; und
Analysieren erster Signale von jedem Photosensor (201), der an dem ersten Szintillationsereignis beteiligt ist, und simultan Analysieren zweiter Signale von jedem Photosensor (201), der an dem zweiten Szintillationsereignis beteiligt ist, wenn die ersten und zweiten Unteranordnungen durch mindestens eine Unteranordnung innerhalb des Detektormoduls (220) separiert sind.

12. Verfahren von Anspruch 11, bei dem der Analysierungsschritt aufweist:
Bestimmen einer ersten Position, einer ersten Energie und einer ersten Ankunftszeit für das erste Szintillationsereignis; und
Bestimmen einer zweiten Position, einer zweiten Energie und einer zweiten Ankunftszeit für das zweite Szintillationsereignis.

13. Verfahren zum Herstellen eines Strahlungsdetektormoduls (220), mit:
Herstellen einer Mehrzahl von Szintillationskristallunteranordnungen, die zwei Endunteranordnungen und eine Mehrzahl mittlerer Unteranordnungen aufweist;
Herstellen einer Mehrzahl von Lichtleiterteilen, die zwei Endteile und eine Mehrzahl mittlerer Teile aufweist;
Anbringen jeder Endunteranordnung an einem entsprechenden der Endteile zum Ausbilden zweier Endsegmente (301);
Anbringen jeder mittleren Unteranordnung an einem entsprechenden der mittleren Teile zum Ausbilden einer Mehrzahl mittlerer Segmente (302, 303);
Anbringen reflektierenden Materials (304) an einer seitlichen Oberfläche mindestens eines der mittleren Segmente (302, 303); und
Anbringen der Endsegmente (301) und der Mehrzahl mittlerer Segmente (302, 303) aneinander zum Ausbilden einer Modulbasis, die eine Szintillationsschicht (203) und eine Lichtleiterschicht (202) aufweist,
bei dem das Strahlungsdetektormodul (220) eine Mehrzahl rundförmiger erster Photosensoren (201) und eine Mehrzahl rundförmiger zweiter Photosensoren (201), die jeder größer als die ersten Photosensoren (201) sind, aufweist, bei dem die ersten und zweiten Photosensoren (201) zum Bedecken der Szintillationskristallunteranordnungen angeordnet und dazu ausgebildet sind, Licht, das von den Szintillationskristallunteranordnungen emittiert wird, zu empfangen, bei dem jeder Photosensor (201) der ersten und zweiten Photosensoren (201) zum Bedecken eines Abschnitts höchstens zweier Unteranordnungen angeordnet ist und die ersten und zweiten Photosensoren (201) lediglich in einer Richtung geteilt werden.

14. Verfahren von Anspruch 13, bei dem der Schritt von Herstellen der Mehrzahl von Lichtleiterteilen Ausbilden mindestens zweier vertiefter Abschnitte in jedem Lichtleiterteil zum Halten jeweiliger erster und zweiter Photosensoren (201) aufweist; und
das Verfahren ferner Anordnen der ersten und zweiten Photosensoren (201) auf der Modulbasis aufweist.

15. Verfahren von Anspruch 13 oder 14, bei dem der Schritt von Herstellen der Mehrzahl von Lichtleiterteilen, die die Mehrzahl mittlerer Teile aufweist, aufweist:
Herstellen mindestens eines mittleren Teils eines ersten Typs und mindestens eines mittleren Teils eines zweiten Typs.

## Revendications

1. Module détecteur de tomographie par émission de positrons (TEP) (220), comprenant :
un réseau (203) d'éléments cristallins de scintillation, le réseau incluant une pluralité de sous-réseaux essentiellement isolés optiquement ; et
une pluralité de premiers photocapteurs de forme ronde (201) et une pluralité de seconds photocapteurs de forme ronde (201) qui sont chacun plus grands que les premiers photocapteurs (201), dans lequel les premiers et seconds photocapteurs (201) sont agencés pour recouvrir le réseau (203) d'éléments cristallins et configurés pour recevoir la lumière émise par le réseau (203) d'éléments cristallins, dans lequel chaque photocapteur (201) des premiers et seconds photocapteurs (201) est agencé pour recouvrir une partie d'au plus deux sous-réseaux et les premiers et seconds photocapteurs (201) sont seulement partagés dans une direction,
dans lequel les sous-réseaux sont isolés optiquement de sorte que la lumière émise par un cristal de scintillation individuel situé dans un sous-réseau correspondant soit concentrée de façon à être reçue uniquement par les photocapteurs (201) des premiers et seconds photocapteurs (201) qui recouvrent le sous-réseau correspondant ; et
au moins une paire d'un premier photocapteur (201) et d'un second photocapteur (201) des premiers et seconds photocapteurs (201), qui reçoit la lumière émise par les cristaux dans un premier sous-réseau, reçoit également la lumière émise par les cristaux dans un et un seul sous-réseau qui est adjacent au premier sous-réseau.

2. Module détecteur de TEP (220) selon la revendication 1, dans lequel
chaque sous-réseau est recouvert par des parties respectives d'un groupe correspondant de deux paires d'un premier photocapteur (201) et d'un second photocapteur (201) des premiers et seconds photocapteurs (201) ;
la lumière provenant de tout cristal de scintillation individuel situé dans un sous-réseau correspondant est concentrée de façon à être reçue uniquement par les parties respectives du groupe correspondant des deux paires du premier photocapteur (201) et du second photocapteur (201) ; et
l'au moins une paire du premier photocapteur (201) et du second photocapteur (201) des premiers et seconds photocapteurs (201), qui reçoit la lumière émise par les cristaux dans le premier sous-réseau, reçoit également la lumière émise par les cristaux dans un et un seul sous-réseau qui est adjacent au premier sous-réseau.

3. Module détecteur de TEP (220) selon la revendication 1 ou 2, comprenant en outre :
un dispositif de traitement de signal configuré pour agréger, pour chaque événement de scintillation, des signaux de sortie en provenance des premiers et seconds photocapteurs (201) dans une zone de déclenchement, dans lequel la zone de déclenchement est formée par un groupe de quatre photocapteurs (201) des premiers et seconds photocapteurs (201) qui recouvrent le sous-réseau correspondant.

4. Module détecteur de TEP (220) selon la revendication 1 ou 2, comprenant en outre :
un dispositif de traitement de signal configuré pour agréger, pour chaque événement de scintillation, des signaux de sortie en provenance de chaque photocapteur (201) dans une zone de déclenchement d'une pluralité de zones de déclenchement en chevauchement définies pour le module (220), chaque zone de déclenchement incluant des premiers et seconds photocapteurs (201) de la pluralité de premiers et seconds photocapteurs (201), dans lequel au moins une paire de premiers et seconds photocapteurs (201), qui reçoit de la lumière en provenance de sous-réseaux adjacents, appartient à deux zones de déclenchement.

5. Module détecteur de TEP (220) selon l'une quelconque des revendications 1 à 4, comprenant en outre :
des éléments de réflecteur configurés pour essentiellement concentrer la lumière émise par l'élément cristallin de scintillation individuel dans le sous-réseau correspondant afin que la lumière émise soit reçue uniquement par les photocapteurs (201) des premiers et seconds photocapteurs (201) qui recouvrent le sous-réseau correspondant.

6. Détecteur de rayonnement, comprenant :
une pluralité de segments de détecteur adjacents (301, 302, 303), chaque segment (301, 302, 303) incluant
un réseau segmenté d'éléments cristallins de scintillation ;
un guide de lumière segmenté agencé adjacent au réseau d'éléments cristallins de scintillation ; et
des réflecteurs (304) agencés autour d'une périphérie du segment de sorte que la lumière produite par un événement de scintillation dans le segment soit essentiellement confinée au segment,
dans lequel chaque segment (302, 303) est couplé à un premier photocapteur de forme ronde (201) et à un second photocapteur de forme ronde (201) qui est plus grand que le premier photocapteur (201), dans lequel les premiers et seconds photocapteurs (201) sont agencés pour recouvrir la pluralité de segments de détecteur adjacents, dans lequel chaque photocapteur (201) des premiers et seconds photocapteurs (201) est agencé pour recouvrir une partie d'au plus deux des segments (301, 302, 303) et les premiers et seconds photocapteurs (201) sont seulement partagés dans une direction.

7. Détecteur de rayonnement selon la revendication 6, dans lequel le détecteur (220) comprend au moins cinq segments de détecteur (301, 302, 303) incluant
un premier segment (301) incluant un réseau d'éléments cristallins de scintillation de type terminal et un guide de lumière de type terminal ;
un deuxième segment (302) incluant un réseau d'éléments cristallins de scintillation de type intermédiaire et un premier guide de lumière de type intermédiaire ;
un troisième segment (303) incluant le réseau d'éléments cristallins de scintillation de type intermédiaire et un second guide de lumière de type intermédiaire ;
un quatrième segment (302) incluant le réseau d'éléments cristallins de scintillation de type intermédiaire et le premier guide de lumière de type intermédiaire ; et
un cinquième segment (301) incluant le réseau d'éléments cristallins de scintillation de type terminal et le guide de lumière de type terminal.

8. Détecteur de rayonnement selon la revendication 6 ou 7, dans lequel le détecteur (220) inclut exactement neuf segments de détecteur, ou dans lequel le détecteur (220) inclut un nombre impair de segments de détecteur intermédiaires (302, 303) et deux segments de détecteur terminaux (301).

9. Système de balayage de tomographie par émission de positrons (PET) (200), comprenant :
une pluralité de modules détecteurs (220) agencés adjacents les uns aux autres pour former un anneau de détecteur cylindrique (210), dans lequel chacun des modules détecteurs (220) inclut un détecteur de rayonnement selon l'une quelconque des revendications 6 à 8.

10. Système de balayage de PET (200) selon la revendication 9, dans lequel la pluralité de modules détecteurs (220) sont indépendants et sont agencés plus proches les uns des autres que la largeur de l'un des photocapteurs (201) de façon à former l'anneau de détecteur cylindrique (210), et/ou dans lequel la pluralité de modules détecteurs (220) sont indépendants et sont agencés à moins de quatre mm les uns des autres de façon à former l'anneau de détecteur cylindrique (210).

11. Procédé de traitement de signaux utilisant un module détecteur de tomographie par émission de positrons (TEP) (220) qui inclut un réseau (203) d'éléments cristallins de scintillation, le réseau (203) incluant une pluralité de sous-réseaux essentiellement isolés optiquement, et une pluralité de premiers photocapteurs de forme ronde (201) et une pluralité de seconds photocapteurs de forme ronde (201) qui sont chacun plus grands que les premiers photocapteurs (201), dans lequel les premiers et seconds photocapteurs (201) sont agencés pour recouvrir le réseau (203) d'éléments cristallins et configurés pour recevoir la lumière émise par le réseau (203) d'éléments cristallins, dans lequel chaque photocapteur (201) des premiers et seconds photocapteurs (201) est agencé pour recouvrir une partie d'au plus deux sous-réseaux et les premiers et seconds photocapteurs (201) sont seulement partagés dans une direction, dans lequel le module détecteur (220) est l'un d'une pluralité de modules détecteurs formant un anneau de détecteur cylindrique (210), le procédé comprenant :
une détection d'un premier événement de scintillation à partir d'un premier sous-réseau de la pluralité de sous-réseaux à l'intérieur du module détecteur (220) ;
une détection d'un second événement de scintillation à partir d'un second sous-réseau de la pluralité de sous-réseaux, dans lequel les premier et second sous-réseaux sont séparés par au moins un sous-réseau à l'intérieur du module détecteur (220) ; et
une analyse de premiers signaux en provenance de chaque photocapteur (201) impliqué dans le premier événement de scintillation, et simultanément, l'analyse de seconds signaux en provenance de chaque photocapteur (201) impliqué dans le second événement de scintillation lorsque les premier et second sous-réseaux sont séparés par au moins un sous-réseau à l'intérieur du module détecteur (220).

12. Procédé selon la revendication 11, dans lequel l'étape d'analyse comprend :
la détermination d'une première position, d'une première énergie et d'un premier temps d'arrivée pour le premier événement de scintillation ; et
la détermination d'une seconde position, d'une seconde énergie et d'un second temps d'arrivée pour le second événement de scintillation.

13. Procédé de fabrication d'un module détecteur de rayonnement (220), comprenant :
la fabrication d'une pluralité de sous-réseaux de cristaux de scintillation, incluant deux sous-réseaux terminaux et une pluralité de sous-réseaux intermédiaires ;
la fabrication d'une pluralité de pièces de guide de lumière, incluant deux pièces terminales et une pluralité de pièces intermédiaires ;
la fixation de chaque sous-réseau terminal à une correspondante des pièces terminales pour former deux segments terminaux (301) ;
la fixation de chaque sous-réseau intermédiaire à une correspondante des pièces intermédiaires pour former une pluralité de segments intermédiaires (302, 303) ;
la fixation d'un matériau réflecteur (304) à une surface latérale d'au moins l'un des segments intermédiaires (302, 303) ; et
la fixation des segments terminaux (301) et de la pluralité de segments intermédiaires (302, 303) ensemble pour former une base de module comportant une couche de scintillation (203) et une couche de guide de lumière (202),
dans lequel le module détecteur de rayonnement (220) inclut une pluralité de premiers photocapteurs de forme ronde (201) et une pluralité de seconds photocapteurs de forme ronde (201) qui sont chacun plus grands que les premiers photocapteurs (201), dans lequel les premiers et seconds photocapteurs (201) sont agencés pour recouvrir les sous-réseaux de cristaux de scintillation et configurés pour recevoir la lumière émise par les sous-réseaux de cristaux de scintillation, dans lequel chaque photocapteur (201) des premiers et seconds photocapteurs (201) est agencé pour recouvrir une partie d'au plus deux sous-réseaux et les premiers et seconds photocapteurs (201) sont seulement partagés dans une direction.

14. Procédé selon la revendication 13, dans lequel l'étape de fabrication de la pluralité de pièces de guide de lumière comprend une formation, dans chaque pièce de guide de lumière, d'au moins deux parties évidées pour maintenir les premiers et seconds photocapteurs respectifs (201) ; et
le procédé comprend en outre l'agencement des premiers et seconds photocapteurs (201) sur la base de module.

15. Procédé selon la revendication 13 ou 14, dans lequel l'étape de fabrication de la pluralité de pièces de guide de lumière, incluant la pluralité de pièces intermédiaires, comprend :
la fabrication d'au moins une pièce intermédiaire d'un premier type et d'au moins une pièce intermédiaire d'un second type.
